# EUROPÄISCHE PATENTSCHRIFT

(11) **EP 0 410 311 B1**
(45) Veröffentlichungstag und Bekanntmachung des Hinweises auf die Patenterteilung: **23.06.1993**
(21) Anmeldenummer: 90113893.3
(22) Anmeldetag: 20.07.1990
(51) Int. Cl.: B60C 15/06, B60C 1/00

(54) **Fahrzeugluftreifen**
Pneumatic tyres for vehicles
Pneumatiques pour véhicules

(30) Priorität: 25.07.1989 DE 3924532
(43) Veröffentlichungstag der Anmeldung: 30.01.1991
(73) Patentinhaber: Continental Aktiengesellschaft, 30165 Hannover (DE)
(72) Erfinder: Stevens, Hendrik, Dr. Dipl.-Chem., D-3000 Hannover 21 (DE); Teves, Reinhard, Dr. Dipl.-Chem., D-3000 Hannover 91 (DE)

(56) Entgegenhaltungen:
- FR-A- 1 153 168
- GB-A- 793 581
- GB-A- 2 163 170

## Beschreibung

Die Erfindung betrifft einen aus Gummi oder gummiähnlichen Kunststoffen aufgebauten Fahrzeugluftreifen mit einem Laufstreifen, einem Verstärkungsgürtel, zwei Seitenwänden und einer Karkasse, die in den Wülsten durch Umschlingen zug- und/oder druckfester Wulstkerne verankert ist, und mit je einem Kernprofil radial außen von den Wulstkernen.

Bei bekannten Fahrzeugluftreifen werden für die einzelnen Aufbauteile zwischen acht und fünfzehn unterschiedliche Kautschukmischungen eingesetzt, um den verschiedenen Anforderungen an die einzelnen Bauteile gerecht zu werden. So kommt es für den Laufstreifen in erster Linie auf eine hohe Abriebfestigkeit an, während für die Seitenwände hohe Anforderungen an die Biegebeanspruchung und Alterungsbeständigkeit gestellt werden und die Kernprofile eine große Härte aufweisen müssen, um den Reifen im Wulstbereich ruhig zu stellen.

Der Erfindung liegt die Aufgabe zugrunde, einen Fahrzeugluftreifen zu schaffen, bei dem bezüglich der Eigenschaften der einzelnen Bauteile Verbesserungen erzielt werden und bei dem die gestellten Anforderungen mit einer geringeren Anzahl von Kautschukmischungen erfüllt werden.

Diese Aufgabe wird erfindungsgemäß dadurch gelöst, daß zumindest eines der Elemente Laufstreifen, Seitenwand, Kernprofil, Wulst, Gummierungsschicht für Festigkeitsträger aus einer Kautschukmischung gebildet ist, die aus 30 bis 100 Massen%, bezogen auf den Kautschukanteil, eines Nitrilgruppen enthaltenden Kohlenwasserstoffkautschuks mit einem Doppelbindungsanteil < 13/100 C-Atome besteht.

Zu einer starken Verringerung der erforderlichen Kautschukmischungen gelangt man, wenn man die Bauteile Laufstreifenseitenwand, Kernprofil, Wulst- und Gummierungsschicht für die Festigkeitsträger aus Kautschukmischungen bildet, die aus 30 bis 100 Massen%, bezogen auf den Kautschukanteil, eines Nitrilgruppen enthaltenden Kohlenwasserstoffkautschuks mit einem Doppelbindungsanteil < 13/100 C-Atome bestehen. Man kommt dann im wesentlichen mit lediglich drei unterschiedlichen Kautschukmischungen aus, die darüber hinaus noch auf demselben Kautschuktyp basieren. Zu den drei Kautschukmischungen gelangt man, wenn man für den Laufstreifen und die Seitenwände eine erste Mischung wählt, für die Gummierungsschichten der Wulstkerne der Karkasse und des Gürtels die zweite Mischung einsetzt und die Wülste und Kernprofile aus der dritten Mischung aufbaut. Es ergibt sich ein Reifen, der sich durch besondere Abriebbeständigkeit, Hochtemperaturbeständigkeit und Ölbeständigkeit auszeichnet. Durch den erfindungsgemäßen Einsatz von HNBR bzw. HNIR erzielt man eine erhöhte Hitzebeständigkeit bis ca. 150°C. Die physikalischen Eigenschaften der Mischungen bleiben über einen extrem weiten Temperaturbereich nahezu konstant. Schließlich ist die hohe Alterungsbeständigkeit hervorzuheben. Wegen der extrem hohen Luftundurchlässigkeit der erfindungsgemäßen Mischungen kann die übliche Innenseele aus Butylkautschuk wegfallen. Wenn die erfindungsgemäßen Mischungen im Laufstreifen und im Seitenwandbereich eingesetzt werden, kann man wegen der stark verbesserten Eigenschaften der Kautschukmischungen diese Bereiche um ca. 25 % dünner auslegen als bei herkömmlichen Reifen, was zu einer hohen Gewichtseinsparung führt. Darüber hinaus können bei den erfindungsgemäßen Reifen zum Teil übliche Gewebelagen in Form von Gürtelabdecklagen oder Wulstverstärkereinlagen weggelassen werden, die bislang unabdingbar waren.

Der Nitrilgruppen enthaltende Kautschuk kann z.B. durch Hydrierung von Nitril-Butadien-Kautschuk oder Nitril-Isopren-Kautschuk oder auf andere Art hergestellt sein. Die Kautschukmischung für die einzelnen Bauteile des Reifens sollte 30 bis 100 Massen%, bevorzugt jedoch 60 bis 100 Massen% des Nitrilgruppen enthaltenden Kautschuks aufweisen.

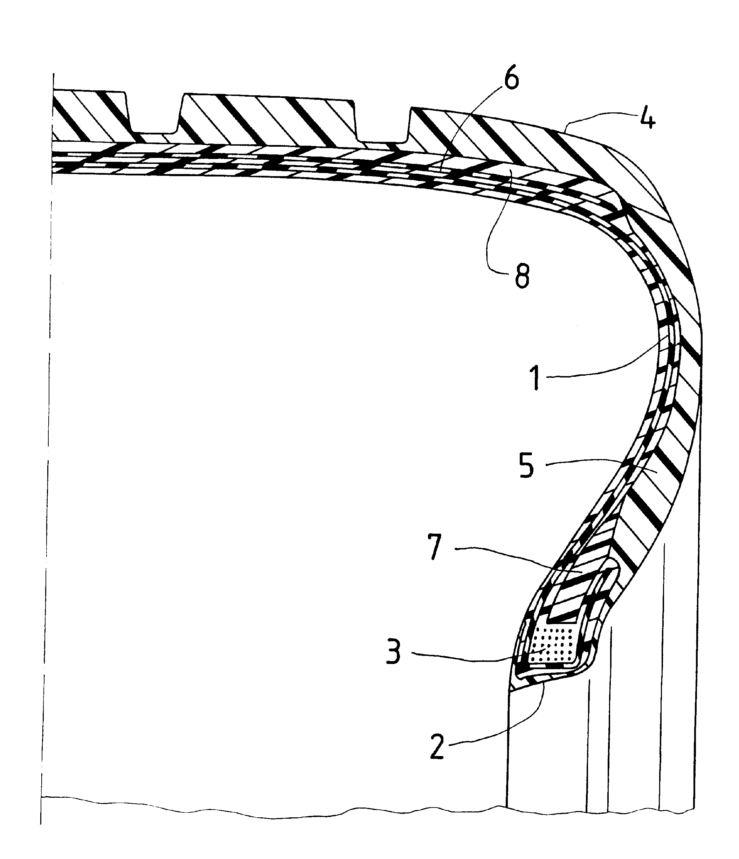

Nachfolgend wird ein Beispiel eines Reifens anhand der Figur skizziert und es werden Mischungsbeispiele für die einzelnen Bauteile angeführt.

Der Reifen weist eine Radialkarkasse 1 auf, die in den Wülsten 2 durch Umschlingen von zugfesten Wulstkernen 3 verankert ist. Der Laufstreifen 4 geht seitlich in Seitenwände 5 über. Radial außen von der Radialkarkasse 1 befindet sich ein üblicher Verstärkungsgürtel 6. Radial außen von den Wulstkernen 3 sind Kernprofile 7 angeordnet. Die Gummierungsschichten der Karkasse 1, des Verstärkungsgürtels 6 und der Kerne 3 sind mit 8 bezeichnet.

Nachfolgend werden mehrere Mischungsbeispiele für die einzelnen Bauteile des Reifens beschrieben.

### Beispiele für die Laufflächenmischung:

Gemäß einer bevorzugten Ausführungsform enthält die Laufflächenmischung einen teilgesättigten Kautschuk mit Nitrilgruppen mit einem Doppelbindungsanteil zwischen 2/100 und 13/100°C-Atomen und weist weiterhin ein Schwefelvernetzungssystem auf. Hiermit wird ein Gummi einer besseren dynamischen Belastbarkeit erzielt. Es werden Abriebwerte von weniger als 50 mm³ und sogar weniger als 30 mm³ erzielt.

### Beispiel I: (Massen%)

- 100: Kautschuk HNBR
- 50: FEF-Ruß
- 10: Esterweichmacher
- 4: Zinkoxid
- 2: Stearinsäure
- 3: Magnesiumoxid
- 5: Alterungsschutzmittel
- 2: Paraffinwachs
- 1,7: Schwefel
- 2: Cyclohexylbenzthiazylsulfenamid
- 0,2: Tetramethylthiuramdisulfid

Physikalische Eigenschaften:
- Festigkeit:: 22 MPa
- Bruchdehnung:: 440 %
- Modul 100 %:: 3 MPa
- Modul 300 %:: 14 MPa
- Härte:: 65 Shore A
- Abrieb (DIN):: 30 mm³
- Rückprallelastizität:: 33 %

### Beispiel II: (Massen%)

- 80: Kautschuk HNBR
- 20: Polybutadien (80 % cis 1,4 - Anteil)
- 40: GPF - Ruß
- 5: Zinkoxid
- 2: Stearinsäure
- 4: Alterungsschutzmittel
- 3: Magnesiumoxid
- 8: Esterweichmacher
- 2: Schwefel
- 1,5: Mercaptobenzthiazyldisulfid
- 0,5: Tetramethylthiuramdisulfid

Physikalische Eigenschaften:
- Festigkeit:: 18,5 MPa
- Bruchdehnung:: 440 %
- Modul 100 %:: 4,3 MPa
- Modul 300 %:: 16,6 MPa
- Härte:: 71 Shore A
- Abrieb:: 22 mm³
- Rückprallelastizität:: 38 %

### Beispiel III: (Massen%)

- 100: Kautschuk HNBR
- 30: SRF - Ruß
- 5: Zinkweiß
- 2: Magnesiumoxid
- 2: Stearinsäure
- 10: Esterweichmacher
- 10: Bis (tert.-butylperoxyisopropyl) benzol
- 2: Trisallylisocyanurat

Physikalische Eigenschaften:
- Festigkeit:: 26 MPa
- Bruchdehnung:: 330 %
- Modul 100 %:: 5,7 MPa
- Modul 300 %:: 24,5 MPa
- Härte:: 70 Shore A
- Abrieb:: 27 mm³
- Rückprallelastizität:: 33 %

Im Beispiel I werden 100 Massen% eines teilhydrierten Nitrilkautschuk eingesetzt, und es kommt ein Vernetzungssystem auf der Basis Schwefel zum Einsatz. Mit der Mischung erzielt man einen Abriebwert von 30 mm³ und eine Rückprallelastizität von 33 %.

Im Beispiel II wird als Kautschukkomponente ein Verschnitt aus 80 Massen% HNBR und 20 Massen% Polybutadien eingesetzt, und die Mischung wird wieder mit einem Schwefelvernetzungssystem vulkanisiert. Bei den physikalischen Eigenschaften ist insbesondere auf den extrem niedrigen Abriebwert von 22 mm³ hinzuweisen. Die Rückprallelastizität beträgt 38 %.

Im Beispiel III besteht die Kautschukkomponente aus 100 Massen% HNBR, während die Vernetzung über ein Peroxydvernetzungssystem erfolgt. Es ergibt sich ein Abriebwert von 27 mm³ und eine Rückprallelastizität von 33 %.

Es sollte angemerkt werden, daß bei den vorstehenden drei Beispielen in der Kautschukkomponente anstatt von HNBR auch HNIR eingesetzt werden kann. Weiterhin ist es selbstverständlich möglich, die Nitrilgruppen enthaltenden gesättigten oder teilgesättigten Kohlenwasserstoffkautschuke HNBR und HNIR als Verschnitte mit weiteren Kautschuken als Kautschukkomponente einzusetzen.

### Beispiele für die Seitenwandmischung:

Gemäß einer bevorzugten Ausführungsform enthält die Seitenwandmischung einen teilgesättigten Kautschuk mit Nitrilgruppen mit einem Doppelbindungsanteil zwischen 2/100 und 13/100°C-Atomen und weist weiterhin ein Schwefelvernetzungssystem auf. Hiermit wird ein Gummi einer besseren dynamischen Belastbarkeit erzielt. Es werden Abriebwerte von weniger als 50 mm³ und sogar weniger als 30 mm³ erzielt.

Die Seitenwandmischung ist vorzugsweise hochdämpfend mit einer Rückprallelastizität von weniger als 40 % ausgebildet.

### Beispel I: (Massen%)

- 100: Kautschuk HNBR
- 20: SRF-Ruß
- 7: Sulfonsäureesterweichmacher
- 5: Zinkoxid
- 2: Stearinsäure
- 3: Magnesiumoxid
- 5: Alterungsschutzmittel
- 2: Paraffinwachs
- 2,0: Schwefel
- 0,1: Tetramethylthiuramdisulfid
- 1,5: Mercaptobenzthiazyldisulfid

Physikalische Eigenschaften:
- Festigkeit:: 15 MPa
- Bruchdehnung:: 510 %
- Modul 100 %:: 1,5 MPa
- Modul 300 %:: 5,2 MPa
- Härte:: 55 Shore A
- Abrieb:: 70 mm³
- Rückprallelastizität:: 65 %

### Beispiel II: (Massen%)

- 80: Kautschuk HNBR
- 20: Polybutadien (80 % cis 1,4 - Anteil)
- 40: GPF - Ruß
- 5: Zinkoxid
- 2: Stearinsäure
- 4: Alterungsschutzmittel
- 3: Magnesiumoxid
- 8: Esterweichmacher
- 2: Schwefel
- 1,5: Mercaptobenzthiazyldisulfid
- 0,5: Tetramethylthiuramdisulfid

Physikalische Eigenschaften:
- Festigkeit:: 18,5 MPa
- Bruchdehnung:: 440 %
- Modul 100 %:: 4,3 MPa
- Modul 300 %:: 16,6 MPa
- Härte:: 71 Shore A
- Abrieb:: 22 mm³
- Rückprallelastizität:: 38 %

Im Beispiel I werden 100 Massen% eines teilhydrierten Nitrilkautschuk eingesetzt, und es kommt ein Vernetzungssystem auf der Basis Schwefel zum Einsatz.

Im Beispiel II wird als Kautschukkomponente ein Verschnitt aus 80 Massen% HNBR und 20 Massen% Polybutadien eingesetzt, und die Mischung wird wieder mit einem Schwefelvernetzungssystem vulkanisiert. Bei den physikalischen Eigenschaften ist insbesondere auf den extrem niedrigen Abriebwert von 22 mm³ hinzuweisen. Die Rückprallelastizität beträgt 38 %. Dies ergibt eine hochdämpfende Seitenwandmischung und damit einen Reifen mit erhöhter Reifengeräuschdämpfung und besserer Fahrstabilität, insbesondere mit einer verbesserten Lenkpräzision.

Es sollte angemerkt werden, daß bei den vorstehenden zwei Beispielen in der Kautschukkomponente anstatt von HNBR auch HNIR eingesetzt werden kann. Weiterhin ist es selbstverständlich möglich, die Nitrilgruppen enthaltenden gesättigten oder teilgesättigten Kohlenwasserstoffkautschuke HNBR und HNIR als Verschnitte mit weiteren Kautschuken als Kautschukkomponente einzusetzen.

Beispiele für die Wulst- und/oder Kernprofilmischung:

### Beispiel I: (Massen%)

- 100: Kautschuk HNBR
- 40: GPF-Ruß
- 5: Zinkoxid
- 1: Stearinsäure
- 2: Magnesiumoxid
- 4: Alterungsschutzmittel
- 2: Paraffinwachs
- 1,7: Schwefel
- 1,5: Mercaptobenzthiazyldisulfid
- 0,5: Tetramethylthiuramdisulfid

Physikalische Eigenschaften:
- Festigkeit:: 23,5 MPa
- Bruchdehnung:: 470 %
- Modul 100 %:: 3,1 MPa
- Modul 300 %:: 12,3 MPa
- Härte:: 80 Shore A

### Beispiel II: (Massen%)

- 100: Kautschuk HNBR
- 65: FEF-Ruß
- 10: Esterweichmacher
- 2: Zinkoxid
- 2: Stearinsäure
- 3: Alterungsschutzmittel
- 7: Magnesiumoxid
- 1: Paraffinwachs
- 6: Bis (tert.-butylperoxyisopropyl) benzol
- 2: Trisallylisocyanurat

Physikalische Eigenschaften:
- Festigkeit:: 21,2 MPa
- Bruchdehnung:: 380 %
- Modul 100 %:: 4,2 MPa
- Modul 300 %:: 18 MPa
- Härte:: 73 Shore A

### Beispiel III: (Massen%)

- 80: Kautschuk HNBR
- 20: SBR
- 65: FEF-Ruß
- 10: Esterweichmacher
- 2: Zinkoxid
- 2: Stearinsäure
- 3: Alterungsschutzmittel
- 7: Magnesiumoxid
- 1: Paraffinwachs
- 6: Bis (tert.-butylperoxyisopropyl) benzol
- 2: Trisallylisocyanurat

Im Beispiel I werden 100 Massen% eines teilhydrierten Nitrilkautschuk eingesetzt, und es kommt ein Vernetzungssystem auf der Basis Schwefel zum Einsatz. Die Mischung weist eine Härte von 80 Shore A auf.

Im Beispiel II kommt ein Peroxidvernetzungssystem zum Einsatz, und die Mischung ist auf eine Härte von 73 Shore A eingestellt.

Im Beispiel III wird als Kautschukkomponente ein Verschnitt aus 80 Massen% HNBR und 20 Massen% Styrolbutadien eingesetzt, und die Mischung wird wieder mit einem Peroxidvernetzungssystem vulkanisiert. Es ergeben sich im wesentlichen die gleichen physikalischen Eigenschaften wie beim Beispiel II.

Es sollte angemerkt werden, daß bei den vorstehenden drei Beispielen in der Kautschukkomponente anstatt von HNBR auch HNIR eingesetzt werden kann. Weiterhin ist es selbstverständlich möglich, die Nitrilgruppen enthaltenden gesättigten oder teilgesättigten Kohlenwasserstoffkautschuke HNBR und HNIR als Verschnitte mit weiteren Kautschuken als Kautschukkomponente einzusetzen, dies insbesondere bei einem Einsatz eines Peroxidvernetzungssystems.

Bei Mischungen nach dem Stand der Technik sind in der Regel Phenolharzsysteme erforderlich, um die notwendige Härte zu erzielen. Phenolharze bedingen jedoch den Nachteil einer bleibenden Dehnung des Gummis bei Überbeanspruchungen. Mit den erfindungsgemäßen phenolharzfreien Mischungen wird dieser Nachteil vermieden. Als weiterer Vorteil sind eine sehr hohe Alterungsbeständigkeit sowie verbesserte Druckverformungsrestwerte zu nennen. Die Wulst- und/oder Kernprofilmischung sollte 30 bis 100 Massen%, bevorzugt jedoch 60 bis 100 Massen%, an HNBR bzw. HNIR enthalten.

Beispiele für die Kautschukmischung für Festigkeitsträgergummierungsschichten:

### Beispiel I: (Massen%)

- 100: Kautschuk HNBR
- 40: SRF-Ruß
- 5: Zinkoxid
- 1: Stearinsäure
- 1: Magnesiumoxid
- 2: Alterungsschutzmittel
- 2,0: Schwefel
- 0,1: Tetramethylthiuramdisulfid
- 1,5: Mercaptobenzthiazyldisulfid

Physikalische Eigenschaften:
- Festigkeit:: 18 MPa
- Bruchdehnung:: 450 %
- Modul 100 %:: 2,6 MPa
- Modul 300 %:: 12,4 MPa
- Härte:: 64 Shore A
- Luftdurchlässigkeit (RT):: 10⁻¹⁷ m²/Pa·s

### Beispiel II: (Massen%)

- 80: Kautschuk HNBR
- 20: NR
- 40: SRF-Ruß
- 5: Zinkoxid
- 1: Stearinsäure
- 1: Magnesiumoxid
- 2: Alterungsschutzmittel
- 2,0: Schwefel
- 0,1: Tetramethylthiuramdisulfid
- 1,5: Mercaptobenzthiazyldisulfid

Im Beispiel I werden 100 Massen% eines teilhydrierten Nitrilkautschuk eingesetzt, und es kommt ein Vernetzungssystem auf der Basis Schwefel zum Einsatz. Mit der Mischung erzielt man eine Luftdurchlässigkeit von ca. 10⁻⁷ m²/Pa·s.

Im Beispiel II wird als Kautschukkomponente ein Verschnitt aus 80 Massen% HNBR und 20 Massen% Naturkautschuk eingesetzt, und die Mischung wird wieder mit einem Schwefelvernetzungssystem vulkanisiert. Es ergeben sich im wesentlichen die gleichen physikalischen Eigenschaften wie beim Beispiel I.

Es sollte angemerkt werden, daß bei den vorstehenden drei Beispielen in der Kautschukkomponente anstatt von HNBR auch HNIR eingesetzt werden kann. Weiterhin ist es selbstverständlich möglich, die Nitrilgruppen enthaltenden gesättigten oder teilgesättigten Kohlenwasserstoffkautschuke HNBR und HNIR als Verschnitte mit weiteren Kautschuken als Kautschukkomponente einzusetzen.

Durch den erfindungsgemäßen Einsatz von HNBR bzw. HNIR erhält man eine Universalmischung für Gummierungsschichten zur Einbettung von Festigkeitsträgereinlagen bei Reifenaufbauteilen. Gegenüber vorbekannten Gummierungen wird eine entscheidend verbesserte dynamische Belastbarkeit und eine erhöhte Alterungsbeständigkeit erhalten. Weiterhin erzielt man eine erhöhte Hitzebeständigkeit bis ca. 150°C. Die physikalischen Eigenschaften der Mischungen bleiben über einen extrem weiten Temperaturbereich nahezu konstant. Wegen der extrem hohen Luftundurchlässigkeit kann man beim Einsatz der erfindungsgemäßen Mischung als Karkaßgummierung auf eine übliche Innenseele aus Butylkautschuk verzichten.

Gemäß einer bevorzugten Ausführungsform enthält die Kautschukmischung der Gummierungsschicht einen teilgesättigten Kautschuk mit Nitrilgruppen mit einem Doppelbindungsanteil zwischen 2/100 und 13/100°C-Atomen und weist weiterhin ein Schwefelvernetzungssystem auf. Hiermit wird ein Gummi einer noch besseren dynamischen Belastbarkeit erzielt. Es werden Luftdurchlässigkeitswerte (RT) von etwa 10⁻¹⁷ m²/Pa·s erhalten.

Der Nitrilgruppen enthaltende Kautschuk kann z.B. durch Hydrierung von Nitril-Butadien-Kautschuk oder Nitril-Isopren-Kautschuk oder auf andere Art hergestellt sein. Die Mischung für die Gummierungsschicht sollte 30 bis 100 Massen%, bevorzugt jedoch 60 bis 100 Massen%, dieses Kautschuks bezogen auf den Gesamtkautschukanteil enthalten.

## Patentansprüche

1. Aus Gummi oder gummiähnlichen Kunststoffen aufgebauter Fahrzeugluftreifen mit einem Laufstreifen, einem Verstärkungsgürtel, zwei Seitenwänden und einer Karkasse, die in den Wülsten durch Umschlingen zugund/oder druckfester Wulstkerne verankert ist, und mit je einem Kernprofil radial außen von den Wulstkernen, **dadurch gekennzeichnet,** daß zumindest eines der Elemente Laufstreifen (4), Seitenwand (5), Kernprofil (7), Wulst (2), Gummierungsschicht für Festigkeitsträger (8) aus einer Kautschukmischung gebildet ist, die aus 30 bis 100 Massen%, bezogen auf den Kautschukanteil, eines Nitrilgruppen enthaltenden Kohlenwasserstoffkautschuks mit einem Doppelbindungsanteil < 13/100 C-Atome besteht.

2. Fahrzeugluftreifen nach Anspruch 1, dadurch gekennzeichnet, daß alle genannten Elemente (2, 4, 5, 7, 8) aus Kautschukmischungen gebildet sind die aus 30 bis 100 Massen%, bezogen auf den Kautschukanteil, eines Nitrilgruppen enthaltenden Kohlenwasserstoffkautschuks mit einem Doppelbindungsanteil < 13/100 C-Atome bestehen.

3. Fahrzeugluftreifen nach Anspruch 1 oder 2, dadurch gekennzeichnet, daß er aus lediglich drei unterschiedlichen Kautschukmischungen aufgebaut ist, wobei der Laufstreifen (4) und die Seitenwände (5) aus einer ersten Mischung bestehen, für die Gummierungsschichten (8) der Wulstkerne (3), der Karkasse (1) und des Gürtels (6) die zweite Kautschukmischung eingesetzt ist und die Wülste (2) und Kernprofile (7) aus der dritten Kautschukmischung aufgebaut sind.

4. Fahrzeugluftreifen nach Anspruch 1, dadurch gekennzeichnet, daß der Nitrilgruppen enthaltende Kautschuk HNBR oder HNIR ist.

5. Fahrzeugluftreifen nach Anspruch 1 oder 2, dadurch gekennzeichnet, daß der gesamte Laufstreifen (4) aus der Kautschukmischung mit 30 bis 100 Massen% eines Nitrilgruppen enthaltenden Kohlenwasserstoffkautschuks besteht und daß die Dicke des Laufstreifens (4) etwa 75 % der Dicke üblicher Laufstreifen beträgt.

6. Fahrzeugluftreifen nach Anspruch 1 oder 2, dadurch gekennzeichnet, daß die Dicke der Seitenwände (5) etwa 75 % der Dicke üblicher Seitenwände beträgt.

7. Fahrzeugluftreifen nach Anspruch 1 oder 2, dadurch gekennzeichnet, daß die Seitenwandmischung hochdämpfend mit einer Rückprallelastizität von weniger als 40 % ausgebildet ist.

8. Fahrzeugluftreifen nach Anspruch 1 oder 2, dadurch gekennzeichnet, daß die Wulst- und/oder Kernprofilmischung phenolharzfrei ist.

9. Fahrzeugluftreifen nach Anspruch 1 oder 2, dadurch gekennzeichnet, daß die Luftdurchlässigkeit (RT) der Gummierungsschicht (8) der Karkasse (1) etwa 10⁻¹⁷ m²/Pa·s beträgt und daß der Reifen als schlauchloser Reifen ohne übliche Innenseele ausgebildet ist.

## Claims

1. Pneumatic vehicle tyre, which is constructed from rubber or rubber-like plastics materials and comprises a tread strip, a reinforcing belt, two lateral walls and a carcase, which is secured in the beads by being looped around substantially inextensible and/or pressure-resistant bead cores, and said tyre having a respective core profile radially externally of each bead core, characterised in that at least one of the elements - tread strip (4), lateral wall (5), core profile (7), bead (2), layer of rubber coating for reinforcing members (8) - is formed from a rubber mixture, which comprises 30 to 100 mass %, relative to the rubber content, of a hydrocarbon rubber containing nitrile groups and having a double-bond content < 13/100 C atoms.

2. Pneumatic vehicle tyre according to claim 1, characterised in that all of the above-mentioned elements (2, 4, 5, 7, 8) are formed from rubber mixtures, which comprise 30 to 100 mass %, relative to the rubber content, of a hydrocarbon rubber containing nitrile groups and having a double-bond content < 13/100 C atoms.

3. Pneumatic vehicle tyre according to claim 1 or 2, characterised in that it is constructed from only three different rubber mixtures, the tread strip (4) and the lateral walls (5) comprising a first mixture, the second rubber mixture being used for the layers of rubber coating (8) of the bead cores (3), of the carcase (1) and of the belt (6), and the beads (2) and core profiles (7) being constructed from the third rubber mixture.

4. Pneumatic vehicle tyre according to claim 1, characterised in that the rubber containing nitrile groups is HNBR or HNIR.

5. Pneumatic vehicle tyre according to claim 1 or 2, characterised in that the entire tread strip (4) comprises the rubber mixture with 30 to 100 mass % of a hydrocarbon rubber containing nitrile groups, and in that the thickness of the tread strip (4) is substantially 75 % of the thickness of conventional tread strips.

6. Pneumatic vehicle tyre according to claim 1 or 2, characterised in that the thickness of the lateral walls (5) is substantially 75 % of the thickness of conventional lateral walls.

7. Pneumatic vehicle tyre according to claim 1 or 2, characterised in that the lateral wall mixture is highly damping with a rebound resilience of less than 40 %.

8. Pneumatic vehicle tyre according to claim 1 or 2, characterised in that the bead and/or core profile mixture is free of phenolic resin.

9. Pneumatic vehicle tyre according to claim 1 or 2, characterised in that the air permeability (RT) of the layer of rubber coating (8) of the carcase (1) is substantially 10⁻¹⁷ m²/Pa x s, and in that the tyre is a tubeless tyre without a conventional inner core.

## Revendications

1. Pneumatique pour véhicule réalisé en caoutchouc ou en des matières plastiques semblables au caoutchouc et possédant une bande de roulement, une ceinture de renfort, deux parois latérales et une carcasse, qui est ancrée dans les talons par enroulement autour de tringles résistantes à la traction et/ou à la compression, et respectivement un profilé formant noyau, qui s'étend radialement à l'extérieur des tringles, caractérisé en ce qu'au moins l'un des éléments : bande de roulement (4), paroi latérale (5), profilé formant noyau (7), tringle (2), couche de gommage pour des éléments renforçateurs (8) est formé par un mélange de caoutchouc, qui est constitué par 30 à 100 % en masse, rapportés à la composante de caoutchouc, d'un caoutchouc à base d'hydrocarbure, contenant des groupes nitrile et possédant un pourcentage de liaisons doubles < 13/100 atomes de C.

2. Pneumatique pour véhicule selon la revendication 1, caractérisé en ce que tous les éléments indiqués (2,4,5,7,8) sont formés de mélanges de caoutchouc, qui sont constitués par 30 à 100 % en masse, rapportés à la composante de caoutchouc, d'un caoutchouc à base d'hydrocarbure contenant des groupes nitrile, avec un pourcentage de liaisons doubles < 13/100 atomes de C.

3. Pneumatique pour véhicule selon la revendication 1 ou 2, caractérisé en ce qu'il est constitué uniquement par trois mélanges de caoutchouc différents, la bande de roulement (4) et les parois latérales (5) étant constituées par un premier mélange, tandis que pour les couches de gommage (8) des tringles (3), la carcasse (1) et la ceinture (6) on utilise le second mélange de caoutchouc et que les talons (2) et les profilés formant noyaux (7) sont constitués par le troisième mélange de caoutchouc.

4. Pneumatique pour véhicule selon la revendication 1, caractérisé en ce que le caoutchouc contenant des groupes nitrile est du HNBR ou du HNIR.

5. Pneumatique pour véhicule selon la revendication 1 ou 2, caractérisé en ce que l'ensemble de la bande de roulement (4) est formé par le mélange de caoutchouc contenant 30 à 100 % en masse d'un caoutchouc à base d'hydrocarbure contenant des groupes nitrile et que l'épaisseur de la bande de roulement (4) est égale approximativement à 75 % de l'épaisseur du reste de la bande de roulement.

6. Pneumatique pour véhicule selon la revendication 1 ou 2, caractérisé en ce que l'épaisseur des parois latérales (5) est égale approximativement à 75 % de l'épaisseur des parois latérales usuelles.

7. Pneumatique pour véhicule selon la revendication 1 ou 2, caractérisé en ce que le mélange prévu pour les parois latérales est agencé de manière à réaliser un amortissement élevé, avec une élasticité de rebond inférieure à 40 %.

8. Pneumatique pour véhicule selon la revendication 1 ou 2, caractérisé en ce que le mélange constituant les talons et/ou les profilés formant noyaux ne contient as de résine phénolique.

9. Pneumatique pour véhicule selon la revendication 1 ou 2, caractérisé en ce que la perméabilité à l'air (RT) de la couche de gommage (8) de la carcasse (1) est égale approximativement à 10⁻¹⁷ m²/Pa.s et que le pneumatique est réalisé sous la forme d'un pneumatique sans chambre et sans âme interne usuelle.
